# EUROPEAN PATENT APPLICATION

(11) **EP 4 176 970 A1**
(43) Date of publication of application: **10.05.2023**
(21) Application number: 21831608.1
(22) Date of filing: 22.06.2021
(51) Int. Cl.: B01L 3/00, B01D 61/00

(54) **PARTICLE FILTERING DEVICE AND PARTICLE FILTERING METHOD**

(30) Priority: 02.07.2020 KR 20200081348
(71) Applicant: Clinomics Inc., Ulsan 44919 (KR); Ulsan National Institute of Science and Technology (UNIST), Eonyang-eup Ulju-gun Ulsan 44919 (KR)
(72) Inventor: LEE, Kyusang, Ulju-gun, Ulsan 44920 (KR); PARK, Hee Chul, Ulju-gun, Ulsan 44931 (KR); CHOI, Ju Young, Ulju-gun, Ulsan 44922 (KR); CHO, Yoon Kyoung, Ulju-gun, Ulsan 44919 (KR)
(74) Representative: Germain Maureau
(86) International application number: PCT/KR2021/007836
(87) International publication number: WO 2022/005088

(57) **Abstract**

A particle filtration device according to an embodiment of the present invention as a particle filtration device of a lab-on-disk shape of a circle or polygon of a rotation type includes: a filtration film that separates particles by filtering a sample; a main chamber connected to the inlet surface of the filtration film and supplying the sample to the inlet surface of the filtration film; an outlet chamber that is connected to the outlet surface of the filtration film and accommodates the filtration fluid from which particles are separated while passing through the filtration film; and a waste fluid chamber connected to the outlet chamber and storing the filtration fluid, wherein the particle filtration device includes a first flow path that connects between the outlet chamber and the waste fluid chamber, and a second flow path that connects between the outlet chamber and the waste fluid chamber but is positioned farther from the center of the lab-on-disk than the first flow path.

## Description

### CROSS-REFERENCE TO RELATED APPLICATION

This application claims priority to and the benefit of Korean Patent Application No. 10-2020-0081348 filed in the Korean Intellectual Property Office on July 02, 2020, the entire contents of which are incorporated herein by reference.

### BACKGROUND OF THE INVENTION

### (a) Field of the Invention

The present invention relates to a particle filtration device and a particle filtration method, and more specifically, a particle filtration device that may automatically fill priming water to shorten a separation time of particles from a sample compared to existing ones and to increase particle separation efficiency, and a particle filtration method.

### (b) Description of the Related Art

In general, separating particles is a technique applied to various industries as separating solids of a specific size included in a sample such as a liquid. Among them, particularly, filtration is a technology that applies a pressure difference on both sides of a filtration medium to pass a filtration fluid and deposits particles larger than pores of a filtration medium on the surface of the medium. Since the filtration can be easily applied, consumes little energy, and can be applied using a small space, it is used in general fields such as medical, chemical, environmental, and food industries.

For example, there have been reports of research cases in which biological samples are separated using the above filtration technology and various biochemical tests are performed using the same.

In the biological fluid of a patient with a disease, not only basic blood cells but also biological particles that can be indicators of various diseases exist. These biomolecules may be selectively isolated and detected to diagnose the patient's condition and be used for personalized treatment.

Among them, a representative example is a cancer diagnosis using selective isolation of circulating tumor cells (hereinafter referred to as CTC). The CTCs are cancer cells that are distributed in the blood of metastatic cancer patients, and are cells that play a key role in inducing cancer metastasis by breaking away from a primary cancer tissue, moving along the bloodstream, and then penetrating into other tissues. It is known that the number of CTCs present in a patient's blood is closely related to the degree of cancer progression. Therefore, to perform molecular diagnosis by capturing and counting the CTCs or analyzing biomarkers with nucleic acids (DNA, RNA) extracted from captured cells may be an important biomarker to monitor cancer progress and safely select the best treatment.

However, compared to other blood cells present in blood, the CTCs are usually very rare with a ratio of 1 per 100 million blood cells, including red blood cells. Therefore, a highly precise and accurate cell separation technology is required to utilize the CTCs as an important biomarker.

Most of the CTC isolation methods known to date are methods that utilize antibodies that specifically bind to biomolecules expressed on the surface of the CTCs. This is a method in which these antibodies are coated on a magnetic bead or a specific surface and the blood is shed thereto so that the CTCs bind to a magnetic bead surface or a measurement surface. However, a case has recently been reported that the conventional structures described above have limitations in that the types of the biomolecules expressed on the surface of the CTC are diverse and the amount thereof is non-uniform.

In order to overcome the above-mentioned limitations, a number of cases incorporating the separation method according to physical characteristics of the cells on a microchip have been introduced. For example, a technology for capturing and detecting the cells through the difference in the sizes between the cancer cells and the blood cells is known, and specifically, a filtration system including a filtration module for the separation of target biological particles or the cells and a technology related to the filtration method of the cells using the same are disclosed.

In this filtration process, a technique in which priming water is applied to a filter outlet to increase separation efficiency is also known. However, in order to fill the priming water at this time, since expertise of a skilled worker is required, it takes a lot of time to fill the priming water and errors often occur.

The above information disclosed in this Background section is only for enhancement of understanding of the background of the invention, and therefore it may contain information that does not form the prior art that is already known in this country to a person of ordinary skill in the art.

### SUMMARY OF THE INVENTION

### [Technical Problem]

The problem to be solved by the present invention is to provide a particle filtration device and a particle filtration method that can separate particles more efficiently, specifically to provide a particle filtration device and a particle filtration method that can improve efficiency in the priming water injection step and eliminate errors.

However, the problems to be solved by the embodiments of the present invention are not limited to the above-described problems and may be variously expanded in the range of the technical ideas included in the present invention.

### [Technical Solution]

A particle filtration device according to an embodiment of the present invention as a particle filtration device of a lab-on-disk shape of a circle or polygon of a rotation type includes: a filtration film that separates particles by filtering a sample; a main chamber connected to the inlet surface of the filtration film and supplying the sample to the inlet surface of the filtration film; an outlet chamber that is connected to the outlet surface of the filtration film and accommodates the filtration fluid from which particles are separated while passing through the filtration film; and a waste fluid chamber connected to the outlet chamber and storing the filtration fluid, wherein the particle filtration device includes a first flow path that connects between the outlet chamber and the waste fluid chamber, and a second flow path that connects between the outlet chamber and the waste fluid chamber, but is positioned farther from the center of the lab-on-disk than the first flow path.

A first valve that opens and closes the first flow path on the first flow path may be further included.

A second valve that opens and closes the second flow path on the second flow path may be further included.

The outlet chamber may include a first vent hole connected to the first flow path and a second vent hole connected to the second flow path.

The main chamber and the outlet chamber may be positioned at the upper part and the lower part of the filtration film, respectively, with the filtration film in in a direction perpendicular to the direction away from the center of the lab-on-disk.

The waste fluid chamber may be positioned away from the center of the lab-on-disk relative to the filtration film.

The first flow path may be a path for filling the outlet chamber with the priming water.

A particle filtration method according to another embodiment of the present invention as a particle filtration method using a particle filtration device of a lab-on-disk shape of a circle or polygon of a rotation type, wherein the particle filtration device includes: a filtration film that separates particles by filtering a sample, a main chamber connected to the inlet surface of the filtration film and supplying the sample to the inlet surface of the filtration film; an outlet chamber that is connected to the outlet surface of the filtration film and accommodates the filtration fluid from which particles are separated through the filtration film; and a waste fluid chamber connected to the outlet chamber and storing the filtration fluid, the particle filtration device includes a first flow path that connects between the outlet chamber and the waste fluid chamber, and a second flow path that connects between the outlet chamber and the waste fluid chamber, but is positioned farther from the center of the lab-on-disk than the first flow path, and before filtrating the sample by injecting the sample to the main chamber, the particle filtration method includes filling a priming water to the outlet chamber.

The filling of the priming water to the outlet chamber may include: injecting the priming water to the main chamber; and rotating the particle filtration device to fill the priming water to the outlet chamber in a state that the first flow path is opened and the second flow path is closed.

The filtrating of the sample may include rotating the particle filtration device to filtrate the sample in a state that the first valve is closed and the second valve is opened after injecting the sample to the main chamber.

The particle filtration method may further include, after the filtrating of the sample, rotating the particle filtration device to remove the priming water from the outlet chamber in a state that the first valve and the second valve are both opened.

The rotation speed of the particle filtration device in the filling of the priming water may be slower than the rotation speed of the particle filtration device in the filtering of the sample.

The priming water in the outlet chamber may be filled to be in contact with the filtration film by the filling of the priming water.

### [Advantageous Effects]

According to the embodiments of the present invention, when separating the particles from the particle filtration device, by automatically performing a process of filling the outlet chamber with the priming water, it is possible to accurately and efficiently fill the priming water even without skilled technicians. In other words, it is possible to perform the particle filtration more efficiently than before by operating the particle filtration device after simply and conveniently filling the priming water regardless of the user's skill level.

### BRIEF DESCRIPTION OF THE DRAWINGS

FIG. 1 is a perspective view showing a part of a particle filtration device according to an embodiment of the present invention.
FIG. 2 is a view schematically showing a particle filtration device of FIG. 1.
FIG. 3 is a schematic view to explain an action effect of priming water in an embodiment of the present invention.
FIG. 4 is a flowchart to explain a particle filtration method according to another embodiment of the present invention.
FIG. 5 is a view to explain a process that priming water is filled in a particle filtration method according to another embodiment of the present invention.

### DETAILED DESCRIPTION OF THE EMBODIMENTS

Hereinafter, exemplary embodiments of the present invention are described in detail with reference to the accompanying drawings so that those skilled in the art to which the present invention pertains may easily practice the present invention. The present invention may be implemented in various different forms and is not limited to the exemplary embodiments provided herein.

A portion unrelated to the description is omitted in order to obviously describe the present invention, and the same or similar components are denoted by the same reference numeral throughout the present specification.

In addition, the size and thickness of each component shown in the accompanying drawings are arbitrarily shown for convenience of explanation, and therefore, the present invention is not necessarily limited to contents shown in the drawings. In the drawings, the thickness of layers, films, panels, regions, etc., are exaggerated for clarity. In addition, the thicknesses of some layers and regions are exaggerated in the drawings for convenience of explanation.

It will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, when an element is referred to as being "on" or "above" a reference element, the element may be positioned on or below the reference element, and may not necessarily be "on" or "above" the reference element toward an opposite direction of gravity.

In addition, unless explicitly described to the contrary, the word "comprise", and variations such as "comprises" or "comprising", will be understood to imply the inclusion of stated elements but not the exclusion of any other elements.

Further, throughout the specification, an expression "on a plane" may indicate a case where a target is viewed from the top, and an expression "on a cross section" may indicate a case where a cross section of a target taken along a vertical direction is viewed from its side.

Hereinafter, in the present embodiment, as a sample for a particle separation, a whole blood including rare cell particles is taken as a biological sample, and an example of a filtration separation of circulating tumor cells (CTC), which are the rare cell particles included in a biological sample, will be described. The present invention is not limited to following embodiments, and will be applicable to all technologies for separating particles from various samples by a filtration method.

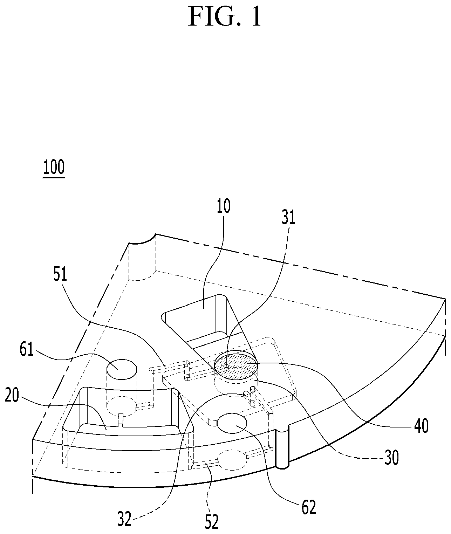

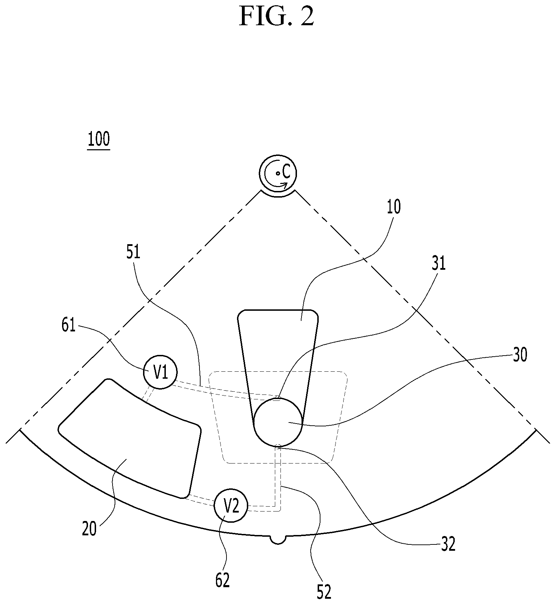

FIG. 1 is a perspective view showing a part of a particle filtration device according to an embodiment of the present invention, and FIG. 2 is a view schematically showing a particle filtration device of FIG. 1.

A particle filtration device 100 according to the present embodiment includes a filtration film 40 capable of filtrating a biological sample, a main chamber 10 connected to an inlet surface of the filtration film 40 and supplying the sample to the inlet surface of the filtration film 40, an outlet chamber 30 that is connected to the outlet surface of the filtration film 40 and accommodates a filtration fluid from which particles are separated through the filtration film 40, and a waste fluid chamber 20 connected to the outlet chamber 30 and in which the filtration fluid is stored.

The main chamber 10 is disposed adjacent to the center C of the particle filtration device 100 of the lab-on-disk shape, and extends from the inlet surface of the filtration film 40, that is, the thickness direction of the disk shape of the particle filtration device 100 to the upper part of the filtration film 40. The main chamber 10 is connected to the inlet surface of the filtration film 40 and supplies the biological sample to the inlet surface of the filtration film 40. In addition, the outlet chamber 30 is connected to the outlet surface of the filtration film 40 and receives the filtrated material from which the particles are separated through the filtration film 40.

Here, the inlet surface of the filtration film 40 refers to as a surface where the entrance of the pore formed on the filtration film 40 is located among both surfaces of the filtration film 40, and a surface in contact with the biological sample, and the outlet surface of the filtration film 40 means a surface opposite to the inlet surface, and a surface where the outlet of the pore formed in the filtration film 40 is positioned. In the case of the present embodiment, as shown in FIG. 1, the upper surface of the filtration film 40 forms the inlet surface along the thickness direction of the disk shape of the particle filtration device 100 and the main chamber 10 extends to the upper part of the filtration film 40, the lower surface on the opposite side forms the outlet surface, and the outlet chamber 30 is disposed at the lower part of the filtration film. In addition, the biological sample or sample means a state including particles, and a solution in which the particles are separated as the biological sample or sample passes through filtration film 40 is called a filtrated material.

In the filtration film 40, numerous pores may be formed for the particle separation, and the pores of various sizes ranging from 3nm to 30mm may be formed for the particle separation of the various sizes. In the present embodiment, the filtration film 40 may have the pore diameter of 5 µm to 10 µm to capture the circulating tumor cells present in the blood sample while. However, this includes errors that may occur when attaching the filtration film 40, and the diameter of the micropore is not necessarily limited thereto, and the diameter may be formed in various ways depending on the size of the particle to be separated.

The filtration film 40 may be formed of various materials to filter biological cells, inorganic material particles, or organic material particles. For example, the filtration film 40 of the present embodiment may be formed of a biologically inert material for the application to the biological sample. The filtration film may be formed of a material simultaneously having optical transparency. Through this, the rare cells can be detected using an optical detector without separating the filtration film 40.

The filtration film 40 may be formed of the same material as the main body of the particle filtration device 100 to facilitate the adhesion to the particle filtration device 100. For example, when both the main body of the particle filtration device 100 and the filtration film 40 are made of polycarbonate material, the filtration film 40 may be attached to the main body of the particle filtration device 100 by chemically dissolving the adhesive area by administering a small amount of acetone to the area where the filtration film 40 is to be bonded. Accordingly, there is an effect of preventing wrinkles that may occur when installing the filtration film 40 on the main body of the particle filtration device 100 or leakage of the rare cells due to incomplete installation.

However, the bonding method of the filtration film 40 is not necessarily limited to the chemical bonding method, and the filtration film 40 may be bonded non-reversibly through various bonding methods such as thermal bonding, ultraviolet rays resin bonding, and ultrasonic wave bonding.

The particle filtration device 100 may be formed as a disk-shaped structure so as to be rotatable with respect to the center C. The filtration film 40 may be positioned to be spaced from the center C in a direction away from the lab-on-disk. In addition, in the particle filtration device 100 of the present embodiment, a hollow space penetrating the center of the particle filtration device 100 may be formed so that the rotation axis may be installed in the center.

The main body of the particle filtration device 100 may be a material with a biologically inactive surface and simultaneously optical transparency, such as polystyrene (PS), polydimethylsiloxane (PDMS), poly(methyl methacrylate) (PMMA), polyacrylate, polycarbonate, polycyclic olefins, polyimide, polyurethanes, and the like. Through this, when the biological sample is injected into the particle filtration device 100, the biological sample does not react with the main body of the particle filtration device 100 so that it has merits of ensuring the biological stability and simultaneously being able to detect the separated rare cells by penetrating the main body of the particle filtration device 100 through an optical detector without discharging them to the outside of the particle filtration device 100.

The sample injected into the main chamber 10 moves along the direction of the centrifugal force by rotating the particle filtration device 100 in the shape of the lab-on-disk, and is accommodated on the upper part of the inlet surface of the filtration film 40 spaced from the center C. The sample that has moved to the top of the inlet surface of the filtration film 40 is in contact with the entire surface of the inlet surface. The sample is filtered through the filtration film 40 to the bottom of the filtration film 40.

The filtrated material that has passed through the filtration film 40 is moved to the outlet chamber 30 provided on the outlet surface of the filtration film 40. At this time, before the filtration is performed, the outlet chamber 30 is pre-filled with priming water, which is the same liquid as the filtrated material. That is, the priming water may be the same solution as the state in which the particles are separated from the sample, that is, the same solution as the filtrated material that has been filtered through the filtration film. Alternatively, the priming water is a solution that has no particles to be separated and does not affect the sample or the filtrated material, and any solution that can reduce a capillary pressure of the filtration film pore on the outlet surface of the filtration film may be applied.

If the outlet chamber 30 facing the outlet surface of the filtration film 40 is filled with the priming water that does not include the particles in advance, the entire area of the filtration film 40 may be directly utilized for the filtration by the priming water, thereby improving the filtration efficiency.

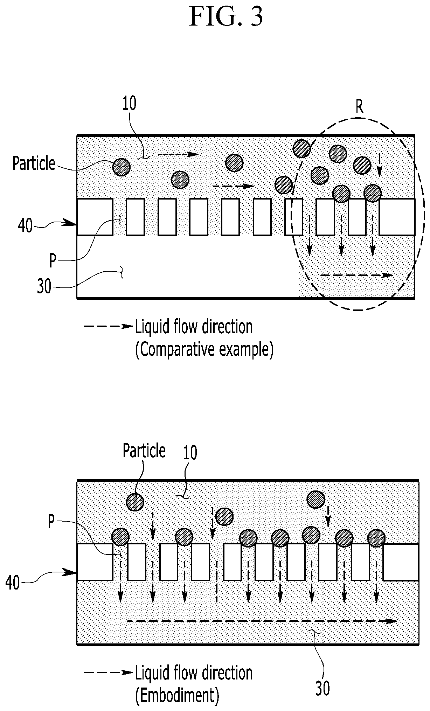

This is described with reference to FIG. 3 more detail. FIG. 3 is a schematic view to explain an action effect of priming water in an embodiment of the present invention.

As shown in FIG. 3, by filling the outlet chamber 30 facing the outlet surface of the filtration film 40 with the priming water (shaded part in FIG. 3) that does not include the particles in advance before the filtration begins as shown in the embodiment, the filtration takes place evenly throughout the entire filtration film 40.

That is, the particle separation using the filtration film 40 is basically performed using the pressure difference between both surfaces of the filtration film 40. During the filtration, a liquid component of the sample passes through the pores of the filtration film 40, and the particles that are larger than the pores do not pass through the pores of the filtration film 40 and are deposited on the inlet surface of the filtration film. However, at this time, in order for the sample solution to pass through the pores of the filtration film 40, it is necessary to overcome the capillary pressure related to the surface tension at the pore outlet. Such capillary pressure is proportional to the surface tension and inversely proportional to the pore size. Therefore, in the filtration process using the filtration film 40 with very small pores, a very high pressure is required for the liquid component of the sample to pass through the pores.

In FIG. 3, the comparative example does not use the priming water, and shows a state in which the sample is filtered without the priming water in the outlet chamber 30 positioned on the outlet surface of the filtration film 40. Like the comparative example, in the state without the priming water, in the case of the sample inflow through the inlet surface of the filtration film 40, the liquid component of the sample cannot pass through the pores due to the capillary pressure applied to the pores P of the filtration film 40, and when the liquid component overcomes the capillary force and flows between the pores of a specific portion R, the liquid component is filtered only through this specific portion R. Accordingly, the fluid flow resistance is greatly reduced in the specific portion where the liquid component flows, so that the sample continues to flow only to the specific portion, and the filtration is performed only in this portion. Therefore, the particle separation is performed only in the specific portion where the liquid component flows. Resultantly, in the case of the comparative example, the filtration cannot be performed on the entire surface of the filtration film 40, and only the area of the specific portion R may be used for the particle separation. In this way, as the entire area of the filtration film 40 is not utilized for the filtration, it takes a lot of time for the filtration and the filtration efficiency decreases.

In FIG. 3, the embodiment uses the priming water, and shows a state in which the sample is filtered by filling the outlet chamber 30 of the outlet surface of the filtration film 40 with the priming water in advance. As in the embodiment, when the outlet chamber 30 of the filtration film 40 is filled with the priming water, the outlet surface of the filtration film 40 is in contact with the priming water. In this state, the liquid component of the sample inflowed to the inlet surface of the filtration film 40 flows smoothly through the pores directly without overcoming the capillary force by the cohesive force of the priming water in contact with the outlet of the filtration film pores P. Since the priming water is in contact with the entire surface of the outlet surface of the filtration film 40, the liquid component of the sample flows through the pores at the entire surface of the inlet surface of the filtration film 40. Accordingly, the filtration is performed while the liquid component of the sample passes through the pores with a smaller flow resistance on the entire surface of the filtration film 40. Therefore, as the filtration is performed on the entire surface of the filtration film, the entire filtration film is utilized for the filtration, thereby greatly improving the filtration time and filtration efficiency. In addition, even when the pores of the filtration film are small, the filtration may be performed at a lower pressure.

In order to increase the filtration efficiency in this way, it is important to accommodate the priming water in the outlet chamber 30 in advance. However, in the prior art, the user had to directly inject the priming water through a pre-prepared inlet or the like. However, in this case, in order to ensure that the priming water is accurately injected without overflowing into other parts of the waste fluid chamber 20 or the particle filtration device 100, a skilled technique is required, and there was a problem that it is highly likely that an error will occur due to a small mistake even by a skilled user. However, in an embodiment of the present invention, the possibility of such an error may be reduced and the priming water may be automatically and accurately filled by the provided first path 51 additionally connected to the outlet chamber 30 for the injection of the priming water.

The particle filtration device 100 of the present embodiment for this purpose includes a first flow path 51 and a second flow path 52 connecting between the outlet chamber 30 and the waste fluid chamber 20. At this time, the first flow path 51 is a flow path for the priming water injection and is positioned closer to the center C than the second flow path 52. In addition, on the first flow path 51, a first valve 61 for opening and closing the first flow path 51 is included, and on the second flow path 52, a second valve 62 for opening and closing the second flow path 52 is included.

The outlet chamber 30 includes a first vent hole 31 connected to the first flow path 51 and a second vent hole 32 connected to the second flow path 52. The first vent hole 31 is positioned closer to the center C of the particle filtration device 100 than the second vent hole 32 in the outlet chamber 30.

The priming water may be filled to the outlet chamber 30 by rotating the particle filtration device 100 in a state that the main chamber 10 is filled with the liquid to be the priming water, the first flow path 51 is opened, and the second flow path 52 is closed by the second valve 62. That is, the main chamber 10 is filled with the liquid to be the priming water, and in the state that the first flow path 51 is opened and the second flow path 52 is closed by the second valve 62, when the particle filtration device 100 is rotated, the air in the outlet chamber 30 is first exhausted along the first flow path 51 through the first vent hole 31 by centrifugal force. If the centrifugal force continues to act after the exhaustion, the liquid in the main chamber 10 passes through the filtration film 40, fills the outlet chamber 30, and then the remaining liquid escapes to the waste fluid chamber 20 through the first flow path 51. The liquid filling the outlet chamber 30, that is, the priming water, is filled to be in contact with the outlet surface of the filtration film 40.

At this time, since the second flow path 52 is closed by the second valve 62, in the process filling the priming water, without passing the priming water to the waste fluid chamber 20 through the second flow path 52, it is possible to easily fill the outlet chamber 30 with the priming water by controlling the rotation while monitoring only the first flow path 51 and the outlet chamber 30, or by adjusting the flow rate and the elapsed time precisely determined in advance. That is, in the prior art, since the priming water is filled directly by hand, in this process, the priming water passes not only to the outlet chamber 30 but also to other parts of the particle separation device 100, such as the waste fluid chamber 20, there were often cases where the priming water was insufficient or the outlet surface of the filtration film 40 could not be contacted, but in the present embodiment, the priming water is automatically filled by the rotation, and since only one path along which the priming water moves is left open, the priming water may be easily filled without such an error occurring.

As above-described, among the first flow path 51 and the second flow path 52 that are connected to the outlet chamber 30 and the waste fluid chamber 20, in the state that the first flow path 51 positioned closer to the center C of the particle filtration device 100 is opened, and the second flow path 52 positioned further away is closed, by putting the priming water into the main chamber 10 and rotating it, the outlet chamber 30 may be automatically filled with the priming water, so the priming water filling process may be easily performed without errors. Therefore, the merit of improving the filtration efficiency by using the priming water may be easily enjoyed.

In the above, the configuration of the particle filtration device 100 according to an embodiment of the present invention has been described. Hereinafter, a particle filtration method using the particle filtration device 100 according to an embodiment of the present invention will be described.

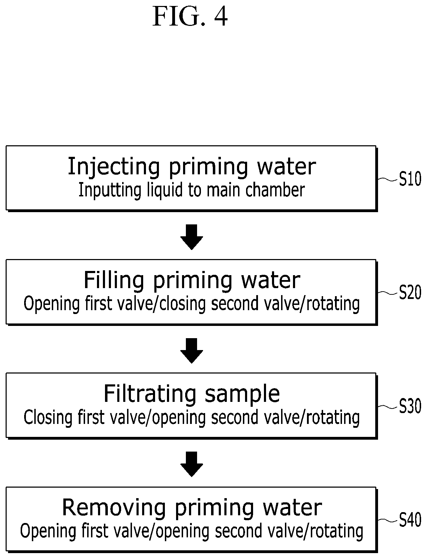

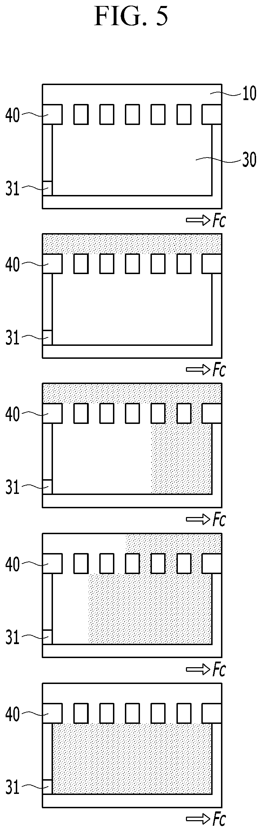

FIG. 4 is a flowchart to explain a particle filtration method according to another embodiment of the present invention, and FIG. 5 is a view to explain a process in which priming water is filled in a particle filtration method according to another embodiment of the present invention.

Referring to FIG. 4 and FIG. 5, the particle filtration method using the particle filtration device 100 according to the present embodiment may include injecting priming water to a main chamber 10 of the particle filtration device 100 (S10), filling the priming water to the outlet chamber 30 (S20), injecting a sample to the main chamber 10 and rotating the sample to be filtrated (S30), and removing the remaining priming water from the outlet chamber 30 after the filtration (S40).

In the injecting of the priming water to the main chamber 10 of the particle filtration device 100 (S10), the liquid to be the priming water is injected through the inlet provided in the main chamber 10. The injection amount of the liquid may be equal to or greater than the amount that may fill the outlet chamber 30. The liquid to be priming water may be a liquid in which particles are removed from the sample to be filtered. For example, in the case of using a while blood sample including circulating tumor cells as a sample, the liquid to be priming water may be a liquid component in a state in which the circulating tumor cells are removed from the while blood sample.

In the filling of the priming water to the outlet chamber 30 (S20), in a state that the first valve 61 is opened and the second valve 62 is closed, the priming water is filled to the outlet chamber 30 by rotating the particle filtration device 100. That is, as shown in FIG. 5, in the state that the first valve 61 is opened and the second valve 62 is closed, when rotating the particle filtration device 100, a centrifugal force acts in a direction Fc, and the priming water injected into the main chamber 10 reaches the inlet surface of the filtration film 40. Due to the pressure of the centrifugal force that continues to act, the air in the outlet chamber 30 is exhausted through the first vent hole 31, and the priming water begins to fill the outlet chamber 30 due to the pressure difference generated by the exhaust. When the priming water completely fills the outlet chamber 30, the rotation is stopped, and thus the priming water fills the outlet chamber 30 to be in contact with the outlet surface of the filtration film 40. In this process, as shown in FIG. 5, in the outlet chamber 30, since only the first flow path 51 connected to the first vent hole 31 is opened, the priming water may be easily filled by the rotation without spilling the priming water into other parts.

In the filtrating of the sample by injecting and rotating the sample to the main chamber 10 (S30), the sample including the particles is injected into the main chamber 10, and then the sample is filtered through the rotation to separate the particles. In this process, in the state that the first valve 61, which was opened to inject the priming water, is closed, and the second valve 62 is opened, the particle separator 100 is rotated.

Accordingly, after the sample moves into the inlet surface of the filtration film 40, the sample is divided into the particles and the filtrated material by the filtration film 40, and the filtrated material passes through the filtration film 40, but the filtrated material is mixed with the priming water and moves to the waste fluid chamber 20 through the second path 52. That is, the sample is filtered through the filtration film 40 by the difference in pressure between the inlet surface and the outlet surface of the filtration film 40. At this time, the particles with a large molecular size do not pass through the pores of the filtration film 40 and remain on the inlet surface of the filtration film 40, and the rest passes through the pores of the filtration film 40 and move to the outlet chamber 30 provided on the outlet surface of the filtration film 40. In this process, the priming water pre-filled in the outlet chamber 30 applies a cohesive force to the sample at the pore outlet of the filtration film 40, so that the filtrated material included in the sample may easily pass through the pores of the filtration film 40 without overcoming the capillary force.

At this time, in the process of the filtration of the sample (S30), the rotation speed of the particle filtration device 100 may be faster than the rotation speed in the process of filling the priming water into the outlet chamber 30 (S20). That is, in the filling of the outlet chamber 30 with the priming water (S20), since the separation of the particles is not performed, but only the outlet chamber 30 is filled with the priming water, a speed sufficient to stop the rotation at an appropriate time while the exhausting occurs in the outlet chamber 30 is sufficient. On the other hand, in the filtrating of the sample (S30), the faster rotation speed may be applied so that the sample may move smoothly and the filtrated particles and the filtrated material may be separated efficiently.

After the completion of the filtration, in the removing of the remaining priming water in the outlet chamber 30 (S40), the first and second valves 61 and 62 are both opened and rotated to move all remaining priming water in the outlet chamber 30 to the waste fluid chamber 20. At this time, the first and second valves 61 and 62 are both rotated in the opened state, but most of the remaining priming water is moved through the second path 52, which is positioned farther in the centrifugal direction.

In this way, according to the present embodiment, it is possible to automatically and easily fill the outlet chamber 30 with the priming water even if a worker is not a skilled person, and thus improve the precision and ease of the process while increasing the filtration efficiency by the priming water. In addition, the priming water and the sample may be controlled in various ways by appropriately combining and rotating the opening and closing of the first valve 61 and the second valve 62 of the first and second paths 51 and 52 connected to the outlet chamber 30. That is, the moving direction of the priming water and the sample may be easily controlled by simply changing whether the first valve 61 and the second valve 62 are opened or closed, and the process may be performed more efficiently with a simple operation.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### [Reference Signs List]

100: particle filtration device
10: main chamber
20: waste fluid chamber
30: outlet chamber
40: filtration film
51: first path
61: first valve
52: second path
62: second valve

## Claims

1. A particle filtration device of a lab-on-disk shape of a circle or polygon of a rotation type, comprising:
a filtration film that separates particles by filtering a sample;
a main chamber connected to the inlet surface of the filtration film and supplying the sample to the inlet surface of the filtration film;
an outlet chamber that is connected to the outlet surface of the filtration film and accommodates the filtration fluid from which particles are separated while passing through the filtration film; and
a waste fluid chamber connected to the outlet chamber and storing the filtration fluid,
wherein the particle filtration device includes a first flow path that connects between the outlet chamber and the waste fluid chamber, and a second flow path that connects between the outlet chamber and the waste fluid chamber but is positioned farther from the center of the lab-on-disk than the first flow path.

2. The particle filtration device of claim 1, further comprising a first valve that opens and closes the first flow path on the first flow path.

3. The particle filtration device of claim 1, further comprising
a second valve that opens and closes the second flow path on the second flow path.

4. The particle filtration device of claim 1, wherein
the outlet chamber includes a first vent hole connected to the first flow path and a second vent hole connected to the second flow path.

5. The particle filtration device of claim 1, wherein
the main chamber and the outlet chamber are positioned at the upper part and the lower part of the filtration film, respectively, with the filtration film in in a direction perpendicular to the direction away from the center of the lab-on- disk.

6. The particle filtration device of claim 1, wherein
the waste fluid chamber is positioned away from the center of the lab-on-disk relative to the filtration film.

7. The particle filtration device of claim 1, wherein
the first flow path is a path for filling the outlet chamber with the priming water.

8. A particle filtration method using a particle filtration device of a lab-on-disk shape of a circle or polygon of a rotation type,
wherein the particle filtration device includes a filtration film that separates particles by filtering a sample, comprising:
a main chamber connected to the inlet surface of the filtration film and supplying the sample to the inlet surface of the filtration film;
an outlet chamber that is connected to the outlet surface of the filtration film and accommodates the filtration fluid from which particles are separated through the filtration film; and
a waste fluid chamber connected to the outlet chamber and storing the filtration fluid, and
the particle filtration device includes a first flow path that connects between the outlet chamber and the waste fluid chamber, and a second flow path that connects between the outlet chamber and the waste fluid chamber but is positioned farther from the center of the lab-on-disk than the first flow path, and
before filtrating the sample by injecting the sample to the main chamber,
the particle filtration method includes filling priming water to the outlet chamber.

9. The particle filtration method of claim 8, wherein
the filling of the priming water to the outlet chamber includes:
injecting the priming water to the main chamber; and
rotating the particle filtration device to fill the priming water to the outlet chamber in a state that the first flow path is opened and the second flow path is closed.

10. The particle filtration method of claim 9, wherein
the filtrating of the sample includes
rotating the particle filtration device to filtrate the sample in a state that the first valve is closed and the second valve is opened after injecting the sample to the main chamber.

11. The particle filtration method of claim 10, further comprising,
after the filtrating of the sample,
rotating the particle filtration device to remove the priming water from the outlet chamber in a state that the first valve and the second valve are both opened.

12. The particle filtration method of claim 10, wherein
the rotation speed of the particle filtration device in the filling of the priming water is slower than the rotation speed of the particle filtration device in the filtering of the sample.

13. The particle filtration method of claim 8, wherein
the priming water in the outlet chamber is filled to be in contact with the filtration film by the filling of the priming water.
